# EUROPEAN PATENT APPLICATION

(11) **EP 4 528 219 A1**
(43) Date of publication of application: **26.03.2025**
(21) Application number: 22942665.5
(22) Date of filing: 18.05.2022
(51) Int. Cl.: G01B 21/02, A24C 5/32

(54) **DEVICE AND METHOD FOR MEASURING ROD-LIKE ITEM, AND DEVICE AND METHOD FOR MANUFACTURING ROD-LIKE DEVICE**

(71) Applicant: Japan Tobacco Inc., Tokyo 105-6927 (JP)
(72) Inventor: NAKAMURA, Satoshi, Tokyo 130-8603 (JP); OKAMOTO, Hiroshi, Tokyo 130-8603 (JP); ONODERA, Naoyuki, Tokyo 130-8603 (JP); HORIKAWA, Shozo, Tokyo 130-8603 (JP)
(74) Representative: Hoffmann Eitle
(86) International application number: PCT/JP2022/020663
(87) International publication number: WO 2023/223460

(57) **Abstract**

This measuring device (6) measures the outer circumferential length (L) of a rod-like item (2) at a wind-up section (4) of the rod-like item (2). The wind-up section (4) has a roll paper supply part (10) that supplies a continuous roll paper (8) to a constituent part (2a) of the rod-like item (2), and a wind-up part (12) that winds up the constituent part (2a) with the roll paper (8) supplied from the roll paper supply part (10) and forms the rod-like item (2). The roll paper supply part (10) comprises: a first measuring part (22) that measures a paper width (Wp) in the width direction (X) that crosses the longitudinal direction (Y) of the roll paper (8); a second measurement part (24) that measures an overlap width (Ws) of an overlap part (20) that is overlapped by the roll paper (8) in the circumferential direction of the rod-like item (2) conveyed from the wind-up part (12); and a calculating part (28) that calculates the outer circumferential length (L) on the basis of a differential width (Wd) derived by subtracting the overlap width (Ws) from the paper width (Wp).

## Description

### Technical Field

The present invention relates to rod-shaped-article measurement devices, rod-shaped-article measurement methods, rod-shaped-article manufacturing apparatuses, and rod-shaped-article manufacturing methods and, more particularly, to a rod-shaped-article measurement device, a rod-shaped-article measurement method, a rod-shaped-article manufacturing apparatus, and a rod-shaped-article manufacturing method with which an outer circumference of a rod-shaped article that is being transported can be measured in real time.

### Background Art

Rod-shaped articles, such as cigarettes, need to be continuously monitored to ensure quality. The articles that are being transported are randomly sampled and tested for various physical properties to meet predetermined quality standards. According to PTL 1, changes in the properties of the articles being manufactured are monitored in real time. The physical properties include the average outer circumferences of the articles obtained by measuring the diameters of the articles (see paraph 0169 of PTL 1).

However, PTL 1 does not describe means by which the outer circumferences of the rod-shaped articles being transported are calculated and measured in real time. The measuring means may involve irradiation of the articles that are continuously transported in the longitudinal direction thereof with laser light in a direction perpendicular to the axial direction of the articles. In this case, the width of a laser-light-blocking region is detected as the diameter of the articles, and the outer circumference is determined from the diameter A laser emitter and a laser receiver of a laser device are repeatedly turned rightward and leftward in a reciprocating motion by 360° with the axis of the articles at the center. For example, the diameter of the articles is measured at 480 locations during one reciprocation in about 2.4 seconds, and the average outer circumference of the articles is calculated from the average diameter of the articles.

Another measuring means may involve the installation of a chamber having a through hole with an inside diameter slightly greater than the diameter of the articles in a transport path along which the articles are continuously transported in the longitudinal direction thereof. In this case, the outer circumference of the articles is calculated based on the ventilation resistance and the pressure drop caused by the gap between the articles and the through hole when the articles pass through the through hole in the chamber.

### Citation List

### Patent Literature

PTL 1: Japanese Unexamined Patent Application Publication (Translation of PCT Application) No. 2006-522928

### Summary of Invention

### Technical Problem

When the laser device and the chamber described above are newly installed in the existing transport path, extensive and costly modification of the existing equipment is required to provide an installation space. In addition, when, for example, the articles have projections and recesses on the surfaces thereof, the recesses are not projected onto the laser receiver in the case where the laser device is used. When the chamber is used, the ventilation resistance and the pressure drop vary due to the projections and recesses. Therefore, the measured diameter of the articles may include measurement errors.

The present invention has been made in light of the above-described problems, and an object of the present invention is to provide a rod-shaped-article measurement device, a rod-shaped-article measurement method, a rod-shaped-article manufacturing apparatus, and a rod-shaped-article manufacturing method with which an outer circumference of a rod-shaped article can be easily and accurately measured in real time.

### Solution to Problem

To achieve the above-described object, a rod-shaped-article measurement device according to the present invention is a measurement device for measuring an outer circumference of a rod-shaped article in a wrapping section of the rod-shaped article, and the wrapping section includes a wrapping-paper supply unit and a wrapping unit, the wrapping-paper supply unit supplying continuous wrapping paper toward a component of the rod-shaped article, the wrapping unit wrapping the component with the wrapping paper supplied from the wrapping-paper supply unit to form the rod-shaped article. The measurement device includes a first measurement unit that measures a paper width of the wrapping paper in a width direction crossing a longitudinal direction of the wrapping paper in the wrapping-paper supply unit; a second measurement unit that measures an overlapping width of an overlapping portion in which portions of the wrapping paper overlap in a circumferential direction of the rod-shaped article transported from the wrapping unit; and a calculation unit that calculates the outer circumference based on a width difference obtained by subtracting the overlapping width measured by the second measurement unit from the paper width measured by the first measurement unit.

A rod-shaped-article measurement method according to the present invention is a measurement method for measuring an outer circumference of a rod-shaped article in a wrapping section of the rod-shaped article, and the wrapping section includes a wrapping-paper supply unit and a wrapping unit, the wrapping-paper supply unit supplying continuous wrapping paper toward a component of the rod-shaped article, the wrapping unit wrapping the component with the wrapping paper supplied from the wrapping-paper supply unit to form the rod-shaped article, and the measurement method includes a first measurement step of measuring a paper width of the wrapping paper in a width direction crossing a longitudinal direction of the wrapping paper in the wrapping-paper supply unit; a second measurement step of measuring an overlapping width of an overlapping portion in which portions of the wrapping paper overlap in a circumferential direction of the rod-shaped article transported from the wrapping unit; and a calculation step of calculating the outer circumference based on a width difference obtained by subtracting the overlapping width measured in the second measurement step from the paper width measured in the first measurement step.

A rod-shaped-article manufacturing apparatus according to the present invention includes the above-described measurement device and a post-processing section to which the rod-shaped article transported through the wrapping section is transported. The post-processing section is electrically connected to the measurement device and includes a removing unit that removes the rod-shaped article for which the abnormal output has been issued.

A rod-shaped-article manufacturing method according to the present invention includes performing the above-described measurement method and a removing step of removing the rod-shaped article for which the abnormal output has been issued in a post-processing section to which the rod-shaped article transported through the wrapping section is transported. Advantageous Effects of Invention

According to the rod-shaped-article measurement device, the rod-shaped-article measurement method, the rod-shaped-article manufacturing apparatus, and the rod-shaped-article manufacturing method described above, the outer circumference of the rod-shaped article can be easily and accurately measured in real time.

### Brief Description of Drawings

[Fig. 1] Fig. 1 is a schematic diagram of a rod-shaped-article manufacturing apparatus and a rod-shaped-article measurement device.
[Fig. 2] Fig. 2 is a perspective view of a rod-shaped article.
[Fig. 3] Fig. 3 is a plan view of wrapping paper measured by a first measurement unit.
[Fig. 4] Fig. 4 is a top view of the rod-shaped article measured by a second measurement unit.
[Fig. 5] Fig. 5 is a flowchart of the process of measuring the rod-shaped article performed by the measurement device. Description of Embodiments

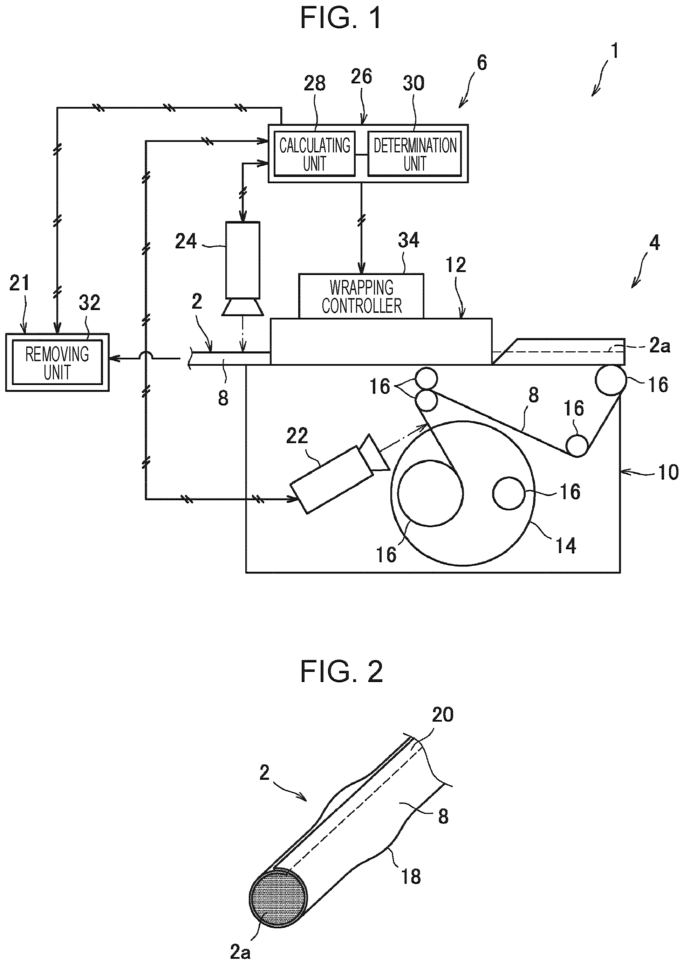

Fig. 1 is a schematic diagram of a rod-shaped-article manufacturing apparatus and a rod-shaped-article measurement device. A manufacturing apparatus 1 includes a wrapping section 4 for a rod-shaped article (hereinafter simply referred to as article) 2. A measurement device 6 for the article 2 is disposed in the wrapping section 4. The measurement device 6 measures an outer circumference L of the article 2 in real time. The wrapping section 4 includes a wrapping-paper supply unit 10 and a wrapping unit 12. The wrapping-paper supply unit 10 includes a bobbin 14 around which wrapping paper 8 is wound and a plurality of transport rollers 16 that transport the wrapping paper 8. The wrapping-paper supply unit 10 feeds the continuous wrapping paper 8 toward a component 2a of the article 2. The wrapping unit 12 wraps the component 2a with the wrapping paper 8 fed from the wrapping-paper supply unit 10 into a rod shape.

Fig. 2 is a perspective view of the article 2. The article 2 is a tobacco rod formed by wrapping a tobacco portion serving as the component 2a with the wrapping paper 8. The tobacco portion is formed by gathering shredded tobacco into a rod shape. The tobacco portion of the tobacco rod may include a large-diameter portion 18 formed by locally increasing the amount of shredded tobacco gathered and having a diameter somewhat greater than that of other portions. The large-diameter portion 18 serves to suppress the shredded tobacco from falling from the tip of the cigarette, but is known to cause a variation in the outer circumference L of the article 2. The article 2 also includes an overlapping portion 20 in which portions of the wrapping paper 8 overlap in the circumferential direction.

The article 2 manufactured in the wrapping section 4 is supplied to the post-processing section 21. The post-processing section 21 includes a section in which the article 2 is transported and packed, for example, before shipping. The post-processing section 21 also includes a section in which the article 2 is cut into a predetermined length and then filter portions are connected thereto by a filter attachment mechanism (not illustrated) to form cigarettes. As illustrated in Fig. 1, the measurement device 6 includes a first measurement unit 22, a second measurement unit 24, and a control unit 26. The first and second measurement units 22 and 24 are cameras, laser devices, or other optical measurement devices, and are electrically connected to the control unit 26.

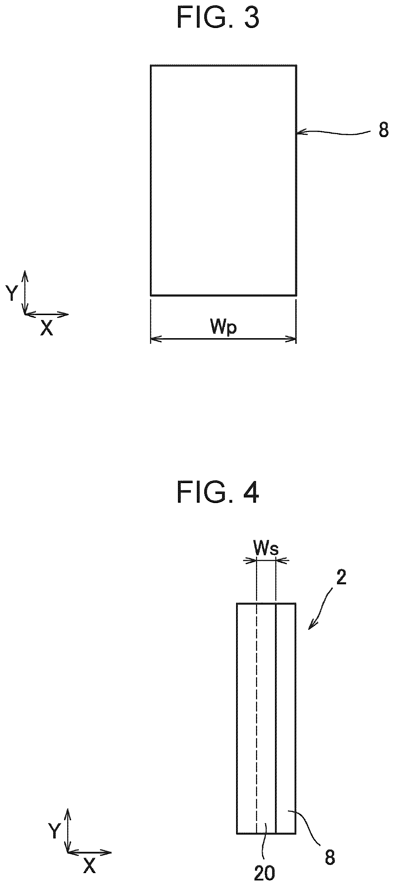

Fig. 3 is a plan view of the wrapping paper 8 viewed in the direction of measurement by the first measurement unit 22. Fig. 4 is a top view of the article 2 viewed in the direction of measurement by the second measurement unit 24. As illustrated in Fig. 3, the first measurement unit 22 measures a paper width Wp of the wrapping paper 8 in a width direction X crossing a longitudinal direction (transporting direction) Y of the wrapping paper 8 in the wrapping-paper supply unit 10. As illustrated in Fig. 4, the second measurement unit 24 measures an overlapping width Ws of the overlapping portion 20 of the article 2 transported from the wrapping unit 12 in top view.

In addition, as illustrated in Fig. 1, the control unit 26 includes a calculation unit 28 and a determination unit 30. The calculation unit 28 receives measurement data of the paper width Wp measured by the first measurement unit 22 and the overlapping width Ws measured by the second measurement unit 24 and calculates an outer circumference L based on the paper width Wp and the overlapping width Ws. The determination unit 30 determines whether or not the outer circumference L calculated by the calculation unit 28 is within a predetermined threshold range. Although not illustrated, the measurement device 6 may include an illumination unit that illuminates the objects to be measured by the first and second measurement units 22 and 24. The measurement device 6 may also include a display that displays the measurement results as illustrated in Figs. 3 and 4.

The post-processing section 21 is electrically connected to the measurement device 6 and includes a removing unit 32. The removing unit 32 removes the component 2a of the article 2 for which an output indicating that the outer circumference L of the article 2 is abnormal is issued. The wrapping section 4 is electrically connected to the measurement device 6, and includes a wrapping controller 34. When an output indicating that the outer circumference L of the article 2 is abnormal is issued, the wrapping controller 34 controls wrapping conditions for the article 2 so that the outer circumference L calculated by the calculation unit 28 falls within the above-described threshold range.

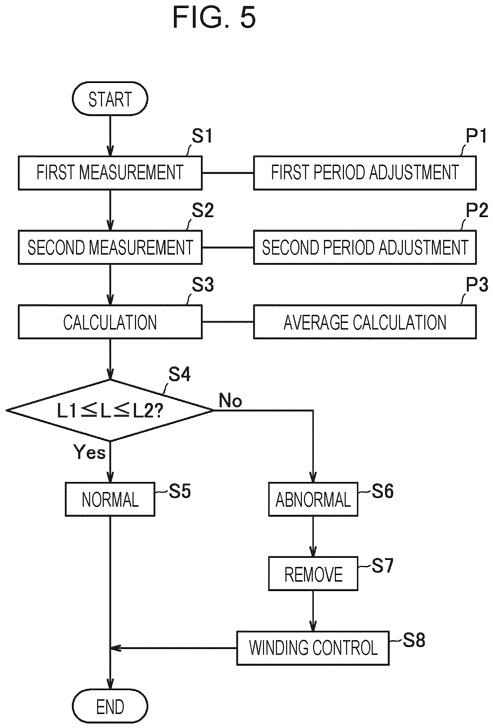

Fig. 5 is a flowchart of a process of measuring the article 2 performed by the measurement device 6. When the measurement of the article 2 is started, the first measurement unit 22 measures the paper width Wp of the wrapping paper 8 in the wrapping-paper supply unit 10 (first measurement step S1). Next, the second measurement unit 24 measures the overlapping width Ws of the article 2 transported from the wrapping unit 12 (second measurement step S2). The measurement data of the paper width Wp and the overlapping width Ws is transmitted to the calculation unit 28.

Next, the calculation unit 28 subtracts the overlapping width measured in the second measurement step S2 from the paper width Wp measured in the first measurement step S1 to calculate a width difference Wd (= Wp - Ws) as the outer circumference L (calculation step S3). The wrapping unit 12 transports the article 2 therefrom at a predetermined transport speed. In the first measurement step S1, the first measurement unit 22 measures the paper width Wp of the wrapping paper 8 at a predetermined first period corresponding to the transport speed of the article 2 (first period adjustment process P1).

In the second measurement step S2, the second measurement unit 24 measures the overlapping width Ws of the overlapping portion 20 at a predetermined second period corresponding to the first period at positions matching the positions at which the wrapping paper 8 is measured at the first period (second period adjustment process P2). When the article 2 includes the large-diameter portion 18 that causes a variation in the outer circumference L, the first measurement unit 22 measures the paper width Wp of the wrapping paper 8 at the first period at positions outside the large-diameter portion 18.

In other words, the first period is adjusted in the first period adjustment process P1 to a time such that the paper width Wp of the wrapping paper 8 is measured at positions outside the large-diameter portion 18. The second measurement unit 24 measures the overlapping width Ws of the article 2 at the second period at the position outside the large-diameter portion 18. In other words, the second period is adjusted in the second period adjustment process P2 to a time such that the overlapping width Ws of the article 2 is measured at positions outside the large-diameter portion 18.

The first and second measurement units 22 and 24 may continuously measure the paper width Wp and the overlapping width Ws, respectively, in the first and second measurement steps S1 and S2. In such a case, in the calculation step S3, the calculation unit 28 continuously calculates the width difference Wd and then averages the width difference Wd over a predetermined length range in an axial direction of the article 2 (same direction as the longitudinal direction Y) to calculate an average width difference Wa, and calculates the average width difference Wa as the outer circumference L (average calculation process P3).

Next, the determination unit 30 determines whether or not the outer circumference L calculated in the calculation step S3 is within the predetermined threshold range (greater than or equal to a predetermined lower limit L 1 and less than or equal to a predetermined upper limit L2) (determination step S4). When the result of the determination performed in the determination step S4 is true (Yes), that is, when L 1 ≤ L ≤ L2 is satisfied, the process proceeds to step S5. In step S5, the measurement device 6 issues an output indicating that the outer circumference L of the article 2 is normal, and ends the measurement of the article 2 to be measured.

When the result of the determination performed in the determination step S4 is false (No) and L1 ≤ L ≤ L2 is not satisfied, the process proceeds to step S6. In step S6, the measurement device 6 issues an output, such as a warning, indicating that the outer circumference L of the article 2 is abnormal. Next, in the post-processing section 21, the removing unit 32 removes the article 2 for which the abnormal output is issued (removing step S7). In addition, when the abnormal output is issued for the article 2, the wrapping controller 34 in the wrapping section 4 controls wrapping conditions for the article 2 so that the outer circumference L calculated in the calculation step S3 falls within the above-described threshold range (wrapping control step S8).

More specifically, in the wrapping control step S8, the wrapping controller 34 changes the width of a groove or the inside diameter of a cylinder used to form the article 2, and thereby adjusts the amount by which the diameter is reduced when the component 2a of the article 2 are wrapped with wrapping paper 8 or the width of the overlapping portion 20 of the wrapping paper 8 that are bonded together, so that the outer circumference L falls within the threshold range. Thus, every time the article 2 is transported into the wrapping section 4, the outer circumference L of the article 2 that is being transported is measured in accordance with the flowchart of the measurement process.

As described above, in the measurement device 6 according to the embodiment, the first measurement unit 22 measures the paper width Wp of the wrapping paper 8 in the wrapping-paper supply unit 10 in the first measurement step S1. The second measurement unit 24 measures the overlapping width Ws of the article 2 transported from the wrapping unit 12 in the second measurement step S2. The calculation unit 28 subtracts the overlapping width measured in the second measurement step S2 from the paper width Wp measured in the first measurement step S1 to calculate the width difference Wd as the outer circumference L in the calculation step S3. Thus, the outer circumference L of the article 2 can be easily and accurately measured in real time while the article 2 is being manufactured.

More specifically, in the first period adjustment process P1, the first measurement unit 22 measures the paper width Wp of the wrapping paper 8 at the predetermined first period corresponding to the transport speed of the article 2. In the second period adjustment process P2, the second measurement unit 24 measures the overlapping width Ws of the overlapping portion 20 at the predetermined second period corresponding to the first period at positions matching the positions at which the wrapping paper 8 is measured at the first period. Since the width difference Wd can be calculated from the overlapping width Ws measured at the position matching the position at which the paper width Wp of the wrapping paper 8 is measured by the first measurement unit 22, the outer circumference L of the article 2 can be accurately measured.

When the article 2 includes the large-diameter portion 18 that causes a variation in the outer circumference L, the first period, which represents the time of measurement by the first measurement unit 22, is adjusted to a time such that the paper width Wp of the wrapping paper 8 is measured at positions outside the large-diameter portion 18 in the first period adjustment process P1. The second period, which represents the time of measurement by the second measurement unit 24, is adjusted to a time such that the overlapping width Ws of the article 2 is measured at positions outside the large-diameter portion 18 in the second period adjustment process P2. Thus, even when the article 2 includes the large-diameter portion 18, measurement errors caused by the existence of the large-diameter portion 18 can be eliminated. Therefore, the outer circumference L of the article 2 can be more accurately measured.

The first and second measurement units 22 and 24 may continuously measure the paper width Wp and the overlapping width Ws, respectively, in the first and second measurement steps S1 and S2. In such a case, in the average calculation process P3, the calculation unit 28 continuously calculates the width difference Wd and then averages the width difference Wd over a predetermined length range in the axial direction of the article 2 to calculate the average width difference Wa and calculates the average width difference Wa as the outer circumference L. In this case, it is not necessary to adjust the first and second periods in the first and second period adjustment processes P1 and P2. Therefore, the outer circumference L of the article 2 can be more easily measured compared to when the first and second periods are adjusted.

In the determination step S4, the determination unit 30 determines that the article 2 is abnormal when the outer circumference L of the end surface 2c is outside the predetermined threshold range. Accordingly, when an appropriate measurement cannot be performed due to an oblique orientation of the article 2 during the measurement or a shift in the time of measurement, a warning or the like can be issued and the article 2 can be removed in advance. Therefore, the article 2 can be measured more accuracy and efficiently.

In the removing step S7, the removing unit 32 of the post-processing section 21 included in the manufacturing apparatus 1 removes the article 2 for which an abnormal output is issued. Accordingly, the article 2 that does not meet the quality standards can be prevented from being shipped. In addition, when an abnormal output is issued, in the wrapping control step S8, the wrapping controller 34 of the wrapping section 4 controls the wrapping conditions for the article 2 so that the outer circumference L calculated by the calculation unit 28 falls within the threshold range. Accordingly, the article 2 that meets the quality standards regarding the outer circumference L can be manufactured.

Although the embodiment has been described above, the above-described embodiment is not restrictive, and various modifications are possible without departing from the spirit thereof. For example, in the embodiment, the article 2 can be measured by performing the determinations stepwise as in the flowchart of the measurement process illustrated in Fig. 5. However, the measurement process is not limited to this. For example, the order in which the removing step S7 and the wrapping control step S8 are performed is not necessarily limited to that in the embodiment.

Since each step has operational effects as described above, it is not necessary that all the steps be performed. In addition, the article measured by the measurement device 6 and the measurement method described above is not limited to the article 2 having the structure according to the embodiment, and may be a rod-shaped article 2 having various structures. For example, the outer circumference L of a heated segment included in a non-combustion-heating-type smoking article may be measured.

In the above-described average calculation process P3, after the paper width Wp and the overlapping width Ws are continuously measured, the average values of the paper width Wp and the overlapping width Ws may be calculated, and the difference between these average values may be used to calculate the average width difference Wa as the outer circumference L. In addition, when the continuous measurement is performed, it is not necessary that the average calculation process P3 be performed.

More specifically, the paper width Wp and the overlapping width Ws that are continuously measured may be used to continuously calculate the width difference Wd as the outer circumference L. When the average calculation process P3 is not performed, the article 2 having an outer circumference L outside the threshold can be accurately identified. Therefore, the amount of article 2 removed in the removing step S7 can be minimized and the cause of abnormality of the article 2 can be easily identified.

The measurement device 6 and the measurement method described above may be used to measure the outer circumference L of a filter rod serving as the article 2. The filter rod is formed by wrapping a filter portion serving as the component 2a with the wrapping paper 8. The filter portion is formed by gathering filter fibers into a rod shape. Unlike the tobacco portion, the filter portion of the filter rod does not include the large-diameter portion 18. Therefore, the time of measurement does not need to be adjusted to perform the measurement at positions outside the large-diameter portion 18.

The acquired data of the outer circumference L may be stored and collected in a server and used for various analyses in addition to being used by the measurement device 6 and the measurement method described above.

### Reference Signs List

- 1: manufacturing apparatus
- 2: rod-shaped article
- 2a: component
- 4: wrapping section
- 6: measurement device
- 8: wrapping paper
- 10: wrapping-paper supply unit
- 12: wrapping unit
- 18: large-diameter portion
- 20: overlapping portion
- 21: post-processing section
- 22: first measurement unit
- 24: second measurement unit
- 28: calculation unit
- 30: determination unit
- 32: removing unit
- 34: wrapping controller
- L: outer circumference
- S1: first measurement step
- S2: second measurement step
- S3: calculation step
- S4: determination step
- S7: removing step
- S8: wrapping control step
- P1: first period adjustment process
- P2: second period adjustment process
- P3: average calculation process
- Wp: paper width
- Ws: overlapping width
- Wd: width difference
- Wa: average width difference
- X: width direction
- Y: longitudinal direction, axial direction

## Claims

1. A rod-shaped-article measurement device that is a measurement device for measuring an outer circumference of a rod-shaped article in a wrapping section of the rod-shaped article,
wherein the wrapping section includes a wrapping-paper supply unit and a wrapping unit, the wrapping-paper supply unit supplying continuous wrapping paper toward a component of the rod-shaped article, the wrapping unit wrapping the component with the wrapping paper supplied from the wrapping-paper supply unit to form the rod-shaped article, and
wherein the measurement device comprises:
a first measurement unit that measures a paper width of the wrapping paper in a width direction crossing a longitudinal direction of the wrapping paper in the wrapping-paper supply unit;
a second measurement unit that measures an overlapping width of an overlapping portion in which portions of the wrapping paper overlap in a circumferential direction of the rod-shaped article transported from the wrapping unit; and
a calculation unit that calculates the outer circumference based on a width difference obtained by subtracting the overlapping width measured by the second measurement unit from the paper width measured by the first measurement unit.

2. The rod-shaped-article measurement device according to claim 1, wherein the wrapping unit transports the rod-shaped article therefrom at a predetermined transport speed,
wherein the first measurement unit measures the paper width of the wrapping paper at a predetermined first period corresponding to the transport speed, and
wherein the second measurement unit measures the overlapping width of the overlapping portion at a predetermined second period corresponding to the first period at positions matching positions at which the wrapping paper is measured at the first period.

3. The rod-shaped-article measurement device according to claim 2, wherein the rod-shaped article includes a large-diameter portion that causes a variation in the outer circumference,
wherein the first measurement unit measures the paper width of the wrapping paper at the first period at positions outside the large-diameter portion, and
wherein the second measurement unit measures the overlapping width of the rod-shaped article at the second period at positions outside the large-diameter portion.

4. The rod-shaped-article measurement device according to claim 1, wherein the first and second measurement units continuously measure the paper width and the overlapping width, respectively, and
wherein the calculation unit continuously calculates the width difference and then calculates an average width difference obtained by averaging the width difference over a predetermined length range in an axial direction of the rod-shaped article as the outer circumference.

5. The rod-shaped-article measurement device according to any one of claims 1 to 4, further comprising:
a determination unit that determines whether or not the outer circumference calculated by the calculation unit is within a predetermined threshold range,
wherein the determination unit issues an abnormal output indicating that the rod-shaped article is abnormal when the outer circumference is outside the threshold range.

6. A rod-shaped-article manufacturing apparatus comprising the measurement device according to claim 5 and a post-processing section to which the rod-shaped article transported through the wrapping section is transported,
wherein the post-processing section is electrically connected to the measurement device and includes a removing unit that removes the rod-shaped article for which the abnormal output has been issued.

7. The rod-shaped-article manufacturing apparatus according to claim 6, wherein the wrapping section is electrically connected to the measurement device and includes a wrapping controller that controls wrapping conditions of the rod-shaped article so that the outer circumference calculated by the calculation unit falls within the threshold range when the abnormal output is issued.

8. A rod-shaped-article measurement method that is a measurement method for measuring an outer circumference of a rod-shaped article in a wrapping section of the rod-shaped article,
wherein the wrapping section includes a wrapping-paper supply unit and a wrapping unit, the wrapping-paper supply unit supplying continuous wrapping paper toward a component of the rod-shaped article, the wrapping unit wrapping the component with the wrapping paper supplied from the wrapping-paper supply unit to form the rod-shaped article, and
wherein the measurement method comprises:
a first measurement step of measuring a paper width of the wrapping paper in a width direction crossing a longitudinal direction of the wrapping paper in the wrapping-paper supply unit;
a second measurement step of measuring an overlapping width of an overlapping portion in which portions of the wrapping paper overlap in a circumferential direction of the rod-shaped article transported from the wrapping unit; and
a calculation step of calculating the outer circumference based on a width difference obtained by subtracting the overlapping width measured in the second measurement step from the paper width measured in the first measurement step.

9. The rod-shaped-article measurement method according to claim 8, wherein the wrapping unit transports the rod-shaped article therefrom at a predetermined transport speed,
wherein the first measurement step includes a first period adjustment process of measuring the paper width of the wrapping paper at a predetermined first period corresponding to the transport speed, and
wherein the second measurement step includes a second period adjustment process of measuring the overlapping width of the overlapping portion at a predetermined second period corresponding to the first period at positions matching positions at which the wrapping paper is measured at the first period.

10. The rod-shaped-article measurement method according to claim 9, wherein the rod-shaped article includes a large-diameter portion that causes a variation in the outer circumference,
wherein the first period is adjusted in the first period adjustment process to a time such that the paper width of the wrapping paper is measured at positions outside the large-diameter portion, and
wherein the second period is adjusted in the second period adjustment process to a time such that the overlapping width of the rod-shaped article is measured at positions outside the large-diameter portion.

11. The rod-shaped-article measurement method according to claim 8, wherein the paper width and the overlapping width are continuously measured in the first and second measurement steps, respectively, and
wherein the calculation step includes an average calculation process of continuously calculating the width difference and then calculating an average width difference obtained by averaging the width difference over a predetermined length range in an axial direction of the rod-shaped article as the outer circumference.

12. The rod-shaped-article measurement method according to any one of claims 8 to 11, further comprising:
a determination step of determining whether or not the outer circumference calculated in the calculation step is within a predetermined threshold range,
wherein the determination step includes issuing an abnormal output indicating that the rod-shaped article is abnormal when the outer circumference is outside the threshold range.

13. A rod-shaped-article manufacturing method comprising:
performing the measurement method according to claim 12 in the wrapping section; and
a removing step of removing the rod-shaped article for which the abnormal output has been issued in a post-processing section to which the rod-shaped article transported through the wrapping section is transported.

14. The rod-shaped-article manufacturing method according to claim 13, further comprising:
a wrapping control step of controlling wrapping conditions of the rod-shaped article in the wrapping section so that the outer circumference calculated in the calculation step falls within the threshold range when the abnormal output is issued.
